# EUROPEAN PATENT SPECIFICATION

(11) **EP 4 358 260 B1**
(45) Date of publication and mention of the grant of the patent: **02.09.2026**
(21) Application number: 23831753.1
(22) Date of filing: 05.06.2023
(51) Int. Cl.: H01M 50/258, H01M 50/211, H01M 50/24, H01M 50/271, H01M 50/289, H01M 10/655, H01M 10/6556, H01M 50/502, H01M 50/204, H01M 10/613, H01M 10/625

(54) **BATTERY PACK**
BATTERIEPACK
BLOC-BATTERIE

(30) Priority: 27.06.2022 KR 20220078243; 01.06.2023 KR 20230070843
(43) Date of publication of application: 24.04.2024
(73) Proprietor: LG Energy Solution, Ltd., Seoul 07335 (KR)
(72) Inventor: JANG, Byung Do, Daejeon 34122 (KR); LEE, Jae Hyun, Daejeon 34122 (KR); KIM, Dae Gil, Daejeon 34122 (KR); LEE, Hyoung Suk, Daejeon 34122 (KR)
(74) Representative: Plasseraud IP
(86) International application number: PCT/KR2023/007694
(87) International publication number: WO 2024/005393

(56) References cited:
- EP-A1- 3 113 242
- WO-A1-2021/108989
- KR-A- 20170 002 139
- KR-A- 20200 131 500
- KR-A- 20210 133 787
- KR-A- 20220 065 601
- KR-B1- 102 409 856

## Description

### [Technical Field]

The present invention relates to a battery pack accommodating a plurality of battery assemblies.

More specifically, the present invention relates to a battery pack in which gases and flames are prevented from spreading to adjacent battery assemblies.

This application claims the benefit of priority based on Korean Patent Application No. 10-2022-0078243, filed on June 27, 2022, and Korean Patent Application No. 10-2023-0070843, filed on June 01, 2023.

### [Background Art]

Battery packs applied to electric vehicles or the like have a structure in which a plurality of battery modules including a plurality of secondary batteries are connected in series or parallel to obtain high output power. The secondary battery may include positive and negative electrode current collectors, a separator, an active material, an electrolyte, and the like and may be repeatedly charged or discharged through electrochemical reactions between the components.

Recently, as battery capacity has increased, battery cells accommodated in a battery pack have become larger or the number of battery cells accommodated therein has increased. As battery capacity increases, the explosive power of battery packs also increases, and thus the risk of explosion is also increasing. For example, when one battery cell ignites and generates high-temperature gases or flames, the spread of the high-temperature gases or flames to adjacent battery cells is accelerated, and thus there is a need for a structure capable of preventing this spread.

Meanwhile, when the type or size of battery cells changes or when a capacity of a battery pack needs to be changed through an increase or decrease in the number of battery cells, the size or specification of the battery pack that accommodates the battery cell should be changed. However, in conventional battery packs, since the standard of a base plate accommodating a battery cell or module was set, the size or area of the battery pack could not be freely changed. In particular, when various types of battery packs with new specifications and capacities need to be manufactured according to the types of newly released vehicles, it has been difficult to respond to the types of newly released vehicles. That is, conventional battery packs had a problem that the degree of freedom in design change was significantly reduced.

Therefore, there is a need to develop a technology capable of preventing gases and flames from spreading between adjacent battery assemblies.

In addition, there is a need to develop a technology in which, while a size or area is freely changed according to the types of battery cells or vehicles in which the cells are used, energy density may be improved by simplifying a structure.

### [Related Art Documents]

### [Patent Documents]

Korean Patent Publication No. 10-2022-0014027

EP3113242A1 discloses a battery pack according to the preamble of the appended claim 1.

### [Disclosure]

### [Technical Problem]

An object of the present invention is to provide a battery pack in which battery assemblies accommodated in the battery pack are each isolated, thereby preventing high-temperature gases or flames from spreading between battery assemblies.

An object of the present invention is also to provide a battery pack in which unit frames usable as common parts are used to constitute the battery pack, thereby allowing the size of the battery pack to be freely changed and expanded in accordance with the type, size, and number of battery cells and a required electric capacity.

### [Technical Solution]

A battery pack according to one embodiment of the present invention includes a plurality of battery assemblies, a lower pack housing that includes a plurality of partition walls each disposed between adjacent battery assemblies, accommodates the plurality of battery assemblies, and has an open upper surface, a gasket coupled on an edge of the upper surface of the lower pack housing and the partition wall to isolate each battery assembly accommodated in the lower pack housing together with the partition wall, and an upper pack housing coupled to the open upper surface of the lower pack housing with the gasket therebetween to seal the battery assemblies and the gasket includes an outer frame coupled to the edge of the upper surface of the lower pack housing, and a plurality of isolation frames that extend parallel to the partition walls inside the outer frame and are coupled to upper surfaces of the partition walls to isolate adjacent battery assemblies together with the partition walls.

A height of the partition wall may be greater than or equal to a height of the battery assembly.

A distance between adjacent partition walls may be less than a width of each of the battery assemblies.

A heat transfer member may be provided between the battery assembly and a bottom surface of the lower pack housing.

The lower pack housing may have a cooling passage embedded in a bottom portion in direct contact with the battery assembly.

An inter-busbar configured to pass through the partition wall and electrically connect adjacent battery assemblies may be installed.

The lower pack housing may include a base plate and a side wall frame coupled to an edge of the base plate.

The battery assemblies may be arranged in two or more columns between adjacent partition walls in an extending direction of the partition wall, two or more partition walls may be installed to be spaced a predetermined interval apart from each other in an arrangement direction of the battery assemblies to correspond to the number of columns of the battery assemblies, and the battery pack may further include a center frame, which extends in a direction perpendicular to the arrangement direction of the battery assemblies and is installed in the predetermined interval between the partition walls.

The pack housing may include a unit frame assembly, which is an assembly of a plurality of unit frames each including the partition wall and a base plate extending in one direction from a lower end portion of the partition wall, wherein an end portion of the base plate at the lower end portion of the partition wall in one unit frame is coupled to an end portion of the base plate extending in the one direction in a subsequent unit frame to sequentially couple the unit frames in a line in a lateral direction and form the unit frame assembly, a front frame coupled to a front end of the unit frame assembly in a front-rear direction, and a rear frame coupled to a rear end of the unit frame assembly in the front-rear direction, and each battery assembly may be accommodated in each unit frame such that a lower surface is supported on the base plate of each unit frame and both side surfaces are supported on the partition walls of adjacent unit frames, which are opposite to each other.

The battery pack may further include a first side frame coupled to the base plate of a foremost unit frame of the unit frame assembly in the one direction.

The battery pack may further include a second side frame coupled to a sidewall of a rearmost unit frame of the unit frame assembly in the one direction.

Each unit frame may include two or more partition walls positioned in a line at a predetermined interval in the front-rear direction and one base that extends in the one direction from the lower end portion of each of the partition walls and is elongated in the front-rear direction, the plurality of battery assemblies may be disposed in two or more columns in the front-rear direction to correspond to the number of the partition walls, and the battery pack may further include a center frame positioned perpendicular to the front-rear direction in the predetermined interval between the partition walls and coupled to the unit frame assembly.

The plurality of isolation frames may each include an inter-busbar coupling block to which an inter-busbar is coupled, and an inter-busbar coupling block coupling groove may be formed in an upper portion of the partition wall.

The isolation frame may be coupled to the upper surface of the partition wall such that the inter-busbar coupling block is inserted into the inter-busbar coupling block coupling groove.

When the battery assemblies and the partition walls are arranged in two or more columns in an extending direction of the partition wall, and a center frame is installed perpendicular to the extending direction between the battery assembly and the partition wall, the plurality of isolation frames may each include a pair of inter-busbar coupling blocks, and inter-busbar coupling block coupling grooves to which the pair of inter-busbar coupling blocks are coupled may be formed in upper portions of the partition walls at both sides facing the center frame.

### [Advantageous Effects]

According to embodiments of the present invention, since a battery pack has a structure allowing each battery assembly accommodated in the battery pack to be isolated, it is possible to prevent high-temperature gases or flames from spreading between battery cells.

In addition, according to embodiments of the present invention, by implementing a cell-to-pack structure that directly accommodates battery cells without a module housing, processes and costs associated with production and assembly of module parts can be eliminated. Also, since an assembly tolerance required for module installation can be eliminated, a space within a pack in a height direction can be made more compact, and the weight of a battery pack can be reduced, an energy density occupying the same battery pack space can be further improved.

In addition, according to embodiments of the present invention, the assembly number of unit frames usable as common parts is increased or decreased, thereby allowing the size and area of a battery pack to be freely changed. Therefore, the size of the battery pack can be changed according to the required specifications, thereby greatly improving the degree of freedom in design of the battery pack. In addition, production costs of parts can be reduced by converting a unit frame into a standard part or a common part.

### [Brief Description of the Drawings]

FIG. 1 is a schematic view illustrating a structure of a typical battery module.
FIG. 2 is a schematic view of a conventional battery pack.
FIG. 3 is a schematic cross-sectional view of a structure of the conventional battery pack.
FIG. 4 is a partially exploded perspective view of a battery pack according to one embodiment of the present invention.
FIG. 5 shows schematic views of a battery assembly accommodated in the battery pack of the present invention.
FIG. 6 is an exploded perspective view of a pack housing of the embodiment of FIG. 4.
FIG. 7 is a schematic view illustrating a sealing structure of the battery pack of FIG. 4.
FIG. 8 is an enlarged view of main parts of an inter-busbar coupling block of a gasket.
FIG. 9 is a schematic view illustrating a process of coupling an inter-busbar in the battery pack of FIG. 4.
FIG. 10 shows schematic views illustrating a process of installing the battery assembly in the battery pack of the present invention.
FIG. 11 shows schematic views illustrating a comparison between the conventional battery pack and the battery pack of the present invention.
FIG. 12 is a partially exploded perspective view of a battery pack according to another embodiment of the present invention.
FIG. 13 shows schematic views illustrating a process of coupling unit frames, which are components of the battery pack of FIG. 12.
FIG. 14 is a schematic view illustrating a sealing structure of the battery pack of FIG. 12.
FIG. 15 is a partially exploded perspective view illustrating a battery pack according to still another embodiment of the present invention.
FIG. 16 is a view illustrating the coupling between a unit frame and a battery assembly in the battery pack of the embodiment of FIG. 15.
FIG. 17 shows schematic views illustrating a process of coupling a gasket and an inter-busbar in the battery pack of FIG. 15.
FIG. 18 is a schematic view of a unit frame and a gasket, which are components of a battery pack, according to a modified example of the present invention.

### [Description of reference numerals]

10: battery module
100: cell stack unit
110: battery cell
120: busbar assembly
121: busbar
122: terminal busbar
130: buffer pad
200,200': lower pack housing
210: partition wall
211: inter-busbar coupling block coupling groove
220: base plate
230: front frame
231: front cover
232: front plate
240: rear frame
241: rear cover
242:rear plate
250: first side frame
260: second side frame
210': partition wall
211': inter-busbar coupling block coupling groove
220': base plate
T1,T2,T3: unit frame
A: unit frame assembly
230': front frame
231': front cover
232': front plate
240': rear frame
241': rear cover
242': rear plate
250': first side frame
260': second side frame
280: center frame
300: gasket
310: outer frame
320: isolation frame
330: inter-busbar coupling block
331: through-coupling hole
340: inter-busbar
400: upper pack housing
1000,2000,3000: battery pack

### [Detailed Description of the Preferred Embodiments]

The present invention will become more apparent by describing in detail the embodiments of the present invention with reference to the accompanying drawings. It should be understood that the embodiments disclosed herein are illustrative only for better understanding of the present invention, and that the present invention may be modified in various ways. In addition, for ease understanding of the present invention, the accompanying drawings are not drawn to actual scale, but the dimensions of some components may be exaggerated.

Hereinafter, the present invention will be described in detail.

### (First Embodiment)

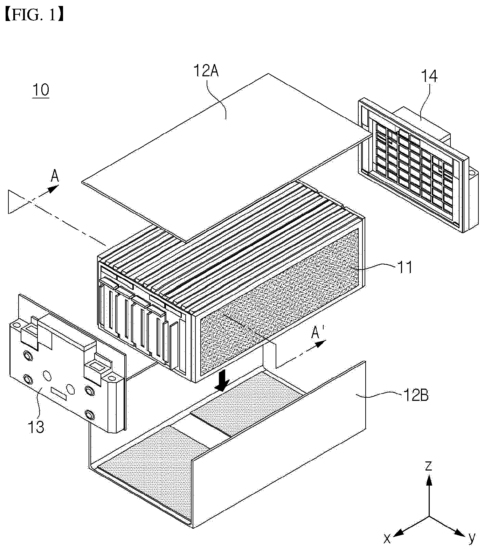

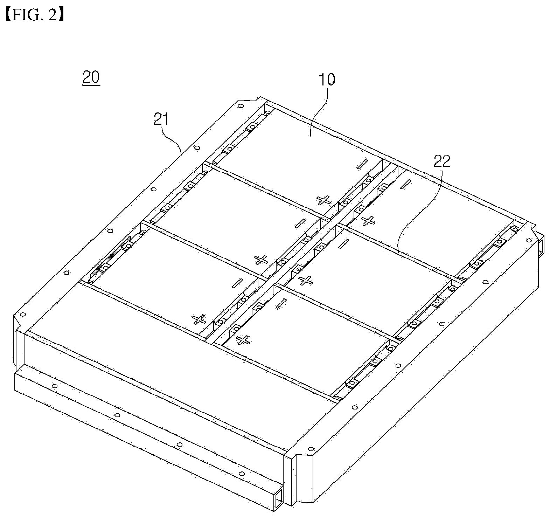

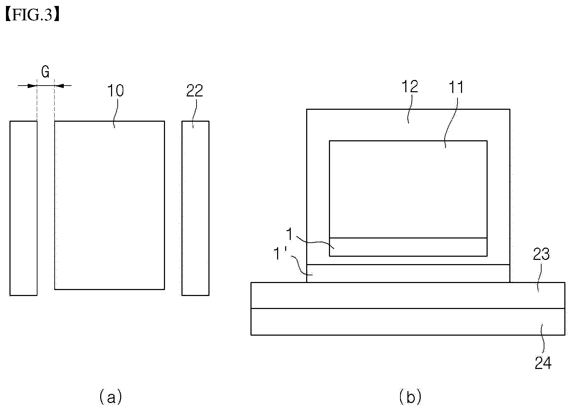

FIG. 1 is a schematic view illustrating a structure of a typical battery module. FIG. 2 is a schematic view of a conventional battery pack. FIG. 3 is a schematic cross-sectional view of a structure of the conventional battery pack.

As shown in FIG. 1, a typical battery module 10 includes a module housing 12 (12A and 12B), which accommodates a plurality of battery cells 11, and a front end plate 13 and a rear end plate 14 that cover front and rear ends of the module housing. In addition, a heat transfer member 1 made of a thermal conductive adhesive or the like is positioned between the battery cell and the module housing (see FIG. 3).

In FIGS. 2 and 3, a plurality of battery modules 10 are illustrated as being installed in a pack housing 21 of a battery pack 20. Each battery module 10 is installed between partition walls 22 provided on a base plate 23 of the pack housing 21. In addition, a heat transfer member 1' made of a thermal conductive adhesive or the like is additionally disposed between the battery module and the base plate 23 on which the module is mounted. A cooling plate 24 is disposed below the base plate 23.

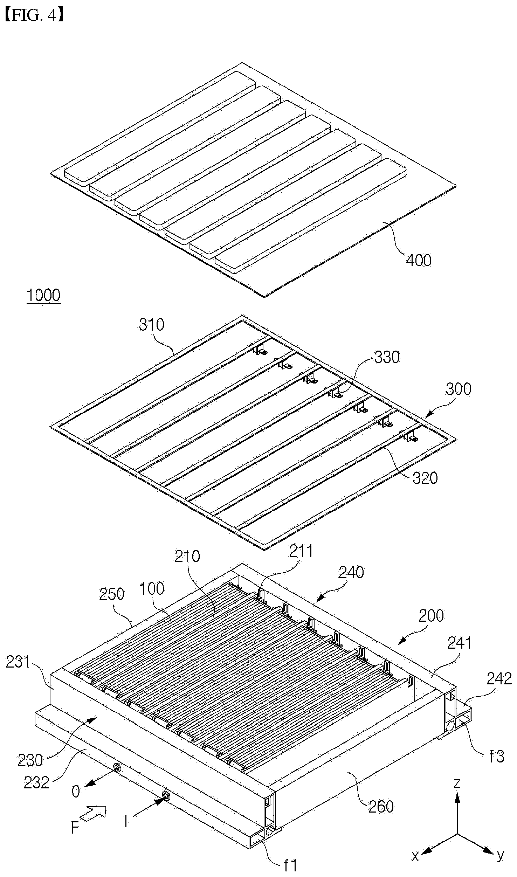

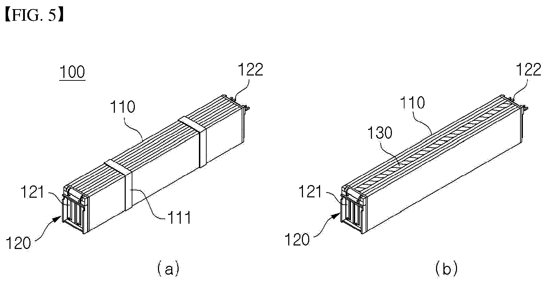

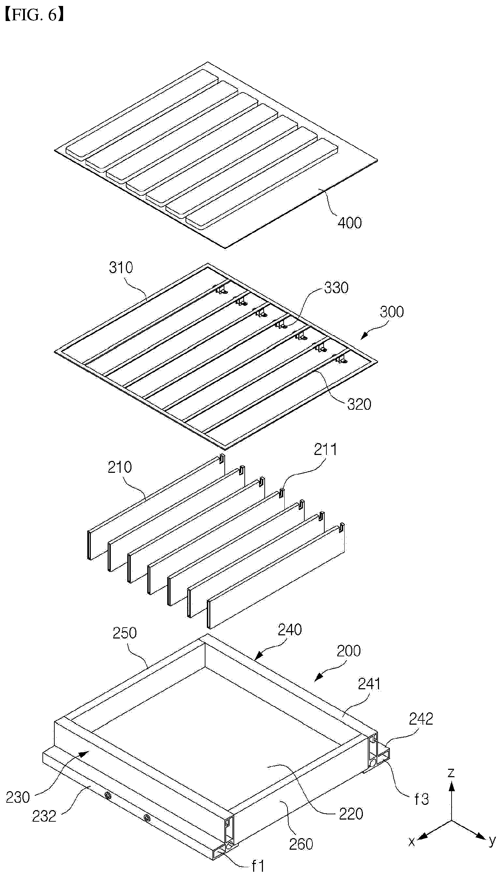

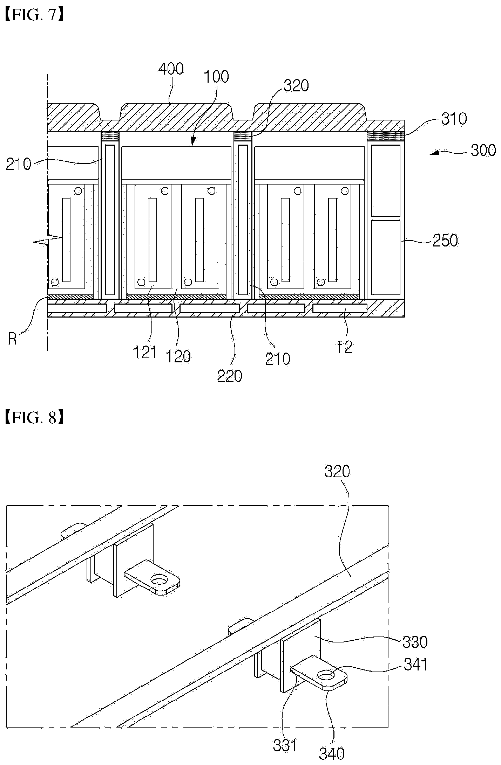

FIG. 4 is a partially exploded perspective view of a battery pack according to one embodiment of the present invention. FIG. 5 shows schematic views of a battery assembly accommodated in the battery pack of the present invention. FIG. 6 is an exploded perspective view of a pack housing of the embodiment of FIG. 4. FIG. 7 is a schematic view illustrating a sealing structure of the battery pack of FIG. 4.

Terms indicating directions such as forward, rearward, leftward, rightward, upward, downward directions used herein may be changed according to a position of an observer or the arrangement form of an object. On the other hand, for convenience of description, in the present specification, directions are classified into forward, rearward, leftward, rightward, upward, downward directions based on a view from a direction indicated by an arrow F of FIG. 4. That is, a front-rear direction is defined as an X direction, a left-right direction is defined as a Y direction, and a height direction is defined as a Z direction.

The battery pack according to one embodiment of the present invention includes a plurality of battery assemblies, a lower pack housing that includes a plurality of partition walls, each disposed between adjacent battery assemblies, accommodates the plurality of battery assemblies, and has an open upper surface, a gasket coupled on an edge of an upper surface of the lower pack housing and the partition wall to isolate each battery assembly accommodated in the lower pack housing together with the partition wall, and an upper pack housing coupled to the open upper surface of the lower pack housing with the gasket therebetween to seal the battery assemblies.

The battery assembly may include a plurality of battery cells. The battery cells may be classified into pouch-type battery cells and can-type battery cells according to the shape of a case. The can-type battery cells may include cylindrical battery cells and prismatic battery cells. In addition, each of the battery cells includes an electrode assembly embedded in a battery case. The electrode assembly includes a positive electrode, a negative electrode, and a separator interposed between the positive electrode and the negative electrode. The electrode assembly may be classified into a jelly-roll type electrode assembly and a stack-type electrode assembly according to an assembly form. The jelly-roll type electrode assembly is formed by winding a positive electrode, a negative electrode, and a separator interposed therebetween. The stack-type electrode assembly is formed by sequentially stacking a positive electrode, a separator, and a negative electrode.

The battery assembly may be a battery module 10 including a module housing that accommodates the plurality of battery cells as shown in FIG. 1. The battery module may have a form in which a portion of the module housing accommodating the battery cells is removed. For example, a battery module, which includes a module housing in which an upper housing 12A is removed or a bottom of a lower housing 12B is removed to simplify a structure, may be the battery assembly of the present invention.

Alternatively, as shown in FIGS. 4 and 5, a battery cell stack in which a module housing itself surrounding upper, lower, left, and right surfaces of a plurality of battery cells is removed may also be the battery assembly.

In the embodiment shown in FIGS. 4 and 5, the battery cell stack in which a plurality of battery cells 110 are stacked, that is, a cell stack unit 100, is applied as the battery assembly. The cell stack unit 100 may be formed by stacking the plurality of battery cells 110. The battery cells 110 may be stacked such that side surfaces thereof are in contact with each other, and side surfaces of adjacent battery cells 110 may be fixed to each other through a double-sided tape. Alternatively, the plurality of stacked battery cells 110 may be wrapped, for example, with a band 111 made of a synthetic resin to form one battery assembly. In the present embodiment, as shown in FIG. 4, the cell stack units 100 may be provided to be stacked in the left-right direction (or horizontal direction). However, if necessary, it is also possible to configure the battery cells 110 to be stacked in a vertical direction (height direction).

Busbar assemblies 120 may be coupled to electrode leads at front and rear end portions of the cell stack unit 100. The busbar assembly 120 may include a busbar 121 that electrically connects the battery cells or a terminal busbar 122 that may be connected to an external power supply. The number of battery cells 110 stacked in one cell stack unit 100 may be, for example, 2, 4, 6, or 8, but is not limited thereto.

In addition, as will be described below, the battery assemblies disposed adjacent to each other may be electrically connected through an inter-busbar 340.

The cell stack unit 100 may include at least one buffer pad 130 between the stacked battery cells 110 (see FIG. 5(b)). The buffer pad is for absorbing the expansion of the battery cell 110 due to a swelling phenomenon.

In the present embodiment, an example of a case in which a pouch-type battery cell is used as the battery cell 110 has been described, but the present invention is not limited thereto. For example, the battery assembly may be constituted using can-type battery cells.

As shown in FIG. 4, the plurality of battery assemblies (for example, the cell stack units 100) are accommodated in a lower pack housing 200 having an open upper surface.

Referring to FIG. 6, the lower pack housing 200 of the present embodiment includes a base plate 220 on which the battery assemblies are mounted, and sidewall frames installed along an edge of the base plate 220 and formed as a whole into a box shape with an open upper surface. Specifically, the sidewall frames may include a front frame 230 and a rear frame 240, which cover front and rear sides of the battery assembly, and a first side frame 250 and a second side frame 260, which cover left and right sides of the battery assembly.

The base plate 220 may have a plate shape extending in the horizontal direction. Here, the horizontal direction refers to a planar direction of a flat ground surface. The base plate 220 may be made of a metal material with high mechanical rigidity.

In addition, the front frame 230, the rear frame 240, and the first and second side frames 250 and 260 are each coupled to the base plate 220. The coupling method may be, for example, a friction stir welding method.

The front frame 230 is elongated in the left-right direction and may have an erect shape in the height direction. The front frame 230 may include a front cover 231 extending in the height direction, and a front plate 232 protruding forward from a lower portion of the front cover. The front plate 232 may be fixedly coupled to a structure such as a vehicle.

The rear frame 240 is elongated in the left-right direction and may have an erect shape in the height direction. The rear frame 240 may have a shape that is the same as or different from that of the front frame. The rear frame 240 includes a rear cover 241 extending in the height direction, and a rear plate 242 protruding rearward from a lower portion of the rear cover to have the same shape as the front frame. The rear plate may be fixedly coupled to a structure such as a vehicle.

The first and second side frames 250 and 260 may have an elongated shape in the front-rear direction. The side frames include a first side frame 250 that covers the left side of the battery assembly and a second side frame 260 that covers the right side of the battery assembly. In the illustrated embodiment, the first and second side frames 250 and 260 are formed in the form of a flat plate. However, like the front and rear frames, the side frames may each be provided as two parts including a flat plate (side cover) extending in the height direction and a flat plate (left plate or right plate) protruding in the left or right direction.

A metal material such as aluminum may be extruded to form internal empty spaces therein, thereby manufacturing the base plate 220 and/or the sidewall frames as hollow frames. In this way, the frames are formed as a hollow type, thereby reducing the weight of a battery pack 1000 and increasing energy efficiency. In addition, when a rib-shaped reinforcement wall is formed in the internal space, the mechanical rigidity of the frames can be maintained at a reliable level.

A heat transfer member R may be provided between the battery assembly and a bottom surface of the pack housing 200. That is, the heat transfer member R may be provided on the base plate constituting the bottom surface of the lower pack housing. In order to smoothly transfer heat, the heat transfer member may include at least some of heat conductive grease, a heat conductive adhesive, a heat conductive epoxy, and a heat dissipation pad, but the present invention is not limited thereto. In addition, since the heat transfer member R serves to fix a lower surface of the battery assembly to the base plate 220, the heat transfer member R may be provided to have an adhesive strength of a predetermined level or more. Through the heat transfer member R, heat may be easily transferred to the base plate having a cooling passage, and thus heat dissipation of the battery pack can be effectively performed.

In addition, the lower pack housing may have a cooling passage embedded in a bottom portion that is in direct contact with the battery assembly. That is, the base plate may have a cooling passage f2 therein. For example, when the base plate 220 is extrusion-molded, a space may be formed inside the base plate according to a direction in which an extruded member moves. The internal space may be divided into a plurality of hollow channels by partition walls. A separate cooling passage may be installed in at least one of the hollow channels, or the hollow channel itself may be used as a cooling passage.

Therefore, in the present invention, a cooling fluid may be allowed to flow through the cooling passage f2 extending along the base plate 220, thereby effectively cooling the battery assembly. In addition, since the base plate 220 is formed in an integrated cooling structure, there is no need to install a separate cooling plate on the base plate unlike the related art. As a result, the height of the battery pack can be reduced to make the battery pack more compact.

In addition, the front frame 230 and the rear frame 240 may respectively include cooling passages f1 and f3 communicating with the cooling passage of the base plate 220. In this case, one of the front frame 230 and the rear frame 240 may include a refrigerant inlet I and a refrigerant outlet O, which communicate with the cooling passages. Alternatively, the refrigerant inlet I may be formed in one of the front frame and the rear frame, and the refrigerant outlet O may be formed in the other. Thus, in the battery pack of the present invention, a cooling path formed by the cooling passage of the front frame, the cooling passage of the base plate, and the cooling passage of the rear frame can be designed in various ways.

A plurality of partition walls 210 are installed on the bottom surface (upper surface of the base plate) of the lower pack housing 200. In the present embodiment, the partition wall 210 extends in the front-rear direction of the battery pack, but the present invention is not limited thereto. The partition wall 210 may extend in the left-right direction.

The battery assembly is disposed between the partition walls 210. That is, each partition wall 210 is disposed between adjacent battery assemblies. Accordingly, each battery assembly is isolated by the partition walls 210 in the left-right direction.

The partition wall 210 may be fastened to the base plate 220 using a fastening member or may be coupled to the base plate 220 through welding or the like. The partition wall 210 may be made of a metal material such as aluminum to sufficiently support a side surface of the battery assembly. In this case, the weight of the partition wall 210 can be reduced by manufacturing the partition wall 210 in a hollow structure through extrusion processing or the like. The material of the partition wall 210 is not limited to a metal material, and as long as rigidity can be secured, the partition wall 210 may be made of a synthetic resin material. However, considering a situation in which high-temperature gas or thermal runaway occurs due to ignition of the battery cell, it may be preferable that the partition wall 210 be made of a metal material such as aluminum, steel, or stainless steel in terms of heat resistance.

The height of the partition wall 210 is formed to be greater than or at least equal to the height of the battery assembly to isolate adjacent battery assemblies.

The battery assembly may be accommodated in the lower pack housing 200 while being in close contact with a side surface of the partition wall 210. To this end, a distance between adjacent partition walls 210 may be formed to be less than a width of each battery assembly, for example, the cell stack unit 100. In this case, in order to accommodate each battery assembly between the partition walls 210, the battery assembly should be compressed in a width direction (battery cell stacking direction) and inserted between adjacent partition walls 210.

When the battery assembly is compressed in the width direction, the buffer pad 130 may be compressed to easily compress the cell stack unit 100. As such, according to the present invention, when the cell stack unit 100 is used as a battery assembly and accommodated in the battery pack, there is no need to provide an assembly tolerance G required for accommodating a typical battery module. In addition, as described above, the cell stack unit 100 may be compressed and inserted between the opposite partition walls. Accordingly, since battery pack space can be saved in the left-right directions, more battery cells can be installed in the same space, thereby improving energy density.

In addition, according to the present invention, a gasket 300 is provided between an upper pack housing 400 and the lower pack housing 200.

The gasket 300 is coupled on an edge of the upper surface of the lower pack housing 200 and the partition wall 210 to isolate each battery assembly 100 accommodated in the lower pack housing 200 together with the partition wall 210.

Specifically, the gasket 300 includes an outer frame 310 and a plurality of isolation frames 320 installed to extend side by side inside the outer frame 310.

The outer frame 310 forms a peripheral portion of the gasket 300 and is a portion that is coupled to the edge of the upper surface of the lower pack housing 200 when the gasket 300 is coupled to the lower pack housing 200. That is, the outer frame 310 is coupled to upper surfaces of the side wall frames (front and rear frames 230 and 240 and first and second side frames 250 and 260) of the lower pack housing 200. The outer frame 310 may be coupled to the upper surfaces of the side wall frames, and the upper pack housing 400 may be coupled to an upper portion of the gasket 300 so that a peripheral portion of the battery pack 1000 can be sealed airtight.

The isolation frame 320 is for isolating each battery assembly accommodated between the partition walls 210. For example, even when the upper pack housing 400 is coupled on the lower pack housing 200, the plurality of battery assemblies are not completely airtight and sealed from each other and are in a state in which air can flow therebetween. A space is formed between the upper pack housing 400 and the partition wall 210 to secure an installation space for mechanical parts installed on an inner surface of the upper pack housing 400 or allow cables necessary for electrical connection to be disposed. In addition, a predetermined volume of free space is provided such that venting gas generated in the battery cell 110 may be discharged. For this reason, each battery assembly is laterally isolated by the partition wall 210 and is in a state in which venting gas may flow through a space above the battery assembly. Accordingly, when ignition occurs in a specific battery cell and high-temperature venting gas or flames are generated, the gas or flames may spread beyond the adjacent partition wall 210 to other adjacent battery assemblies. The isolation frame 320 is intended to prevent this spread. The isolation frames 320 are installed to extend parallel to the partition walls 210 inside the outer frame 310. Therefore, when the gasket 300 is coupled to the upper surface of the lower pack housing 200, the isolation frames 320 may be coupled to upper surfaces of the partition walls 210 to completely isolate adjacent battery assemblies together with the partition walls 210. However, since a space is formed between the isolation frames 320, the battery assembly cannot be completely sealed using the gasket 300 alone. For complete sealing, it is necessary to install the upper pack housing 400 on the gasket 300.

The upper pack housing 400 is coupled to the open upper surface of the lower pack housing 200 with the gasket 300 therebetween. For example, the upper pack housing 400 may be a pack cover assembly in which a pack cover and accompanying parts are coupled. The upper pack housing 400 may be formed in a flat plate shape. However, in order to form a space above the battery assembly, the upper pack housing 400 may have a shape in which a portion corresponding to the battery assembly convexly protrudes, and an inner surface thereof is concavely formed.

Referring to FIG. 7, the battery assemblies are isolated from each other in the lower pack housing 200 by the partition walls 210. In addition, it can be seen that the outer frame 310 of the gasket 300 is coupled to the upper surface of the sidewall frame of the lower pack housing 200, and each isolation frame 320 is also coupled to the upper surface of the partition wall 210 so that each battery assembly is reliably isolated in the height direction. In addition, the upper pack housing 400 is coupled to the gasket 300 to cover the gasket 300 so that each battery assembly is sealed.

A space is formed between each battery assembly and the upper pack housing 400. Accordingly, venting gas generated from each cell stack unit 100 accommodated in the lower pack housing 200 may leak out through a space between the upper pack housing and the lower pack housing 200. However, adjacent battery assemblies are blocked (sealed) by the partition wall 210, the isolation frame 320, and the upper pack housing 400, thereby preventing high-temperature venting gas or flames from spreading between the battery assemblies. As such, according to the present invention, the sealing of the battery pack can be achieved by installing the gasket 300, which isolates the battery assemblies together with the partition wall 210, between the upper pack housing 400 and the lower pack housing 200.

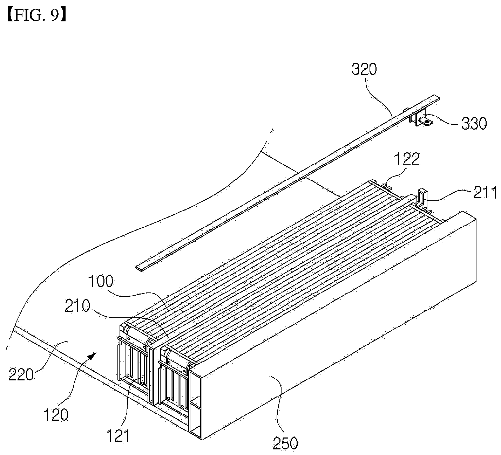

FIG. 8 is an enlarged view of main parts of an inter-busbar coupling block of a gasket. FIG. 9 is a schematic view illustrating a process of coupling the inter-busbar in the battery pack of FIG. 4.

Adjacent battery assemblies are electrically connected with the partition wall 210 interposed therebetween. In the present invention, the inter-busbar 340 may be provided to electrically connect the battery assemblies. The inter-busbar 340 may be installed to pass through the partition wall 210. Both end portions of the inter-busbar 340 protruding to pass through the partition wall 210 are electrically connected to electrode leads of adjacent battery assemblies disposed with the partition wall 210 interposed therebetween. For example, when the battery assembly is the cell stack unit 100, as shown in FIG. 5, a busbar assembly 120 connected to electrode leads of the battery cells 110 is provided. The inter-busbar 340 may be connected to the busbar assembly 120 (for example, the terminal busbar 122 of the busbar assembly 120).

Meanwhile, the battery assembly may be the battery module 10 as shown in FIG. 1. Although not shown in FIG. 1, a busbar assembly may be provided between the battery cell 11 and the front end plate 13 or the rear end plate 14 in the battery module 10. The busbar assembly may include a terminal busbar. Accordingly, the inter-busbar 340 may also be connected to the terminal busbar of the busbar assembly provided in the battery module 10.

The reason why the inter-busbar 340 is installed to pass through the partition wall 210 is to prevent an isolation and sealing structure between the battery assemblies from being damaged by the inter-busbar.

FIG. 8 illustrates an example of an installation structure of the inter-busbar 340. In FIG. 8, an inter-busbar coupling block 330 is installed on each isolation frame 320 of the gasket 300. A through-coupling hole 331 to which the inter-busbar 340 may be coupled is formed in the inter-busbar coupling block 330.

The position of the inter-busbar coupling block 330 on the isolation frame 320 may be set to a position opposite to the electrode lead of the battery assembly. In FIG. 9, the inter-busbar coupling block 330 is installed at one end side of the isolation frame 320 close to the outer frame 310 to be opposite to the electrode lead. However, if necessary, the inter-busbar coupling block 330 may be installed at an end side opposite to the one end side of the isolation frame 320 or may be installed at both the one end side and the end side opposite to the one end side. The position of the inter-busbar coupling block 330 and the position of an inter-busbar coupling block coupling groove 211 to be described below may be determined according to the position of the electrode lead or the terminal busbar of the battery assembly.

In addition, the inter-busbar coupling block coupling groove 211 corresponding to the inter-busbar coupling block 330 is formed in an upper portion of the partition wall 210. Therefore, the inter-busbar coupling block 330 may be inserted into the inter-busbar coupling block coupling groove 211 at the same time when the isolation frame 320 of the gasket 300 is coupled to the upper surface of the partition wall 210. Accordingly, by fastening the gasket 300 to the partition wall 210 once, an operation of coupling the upper surface of the partition wall 210 and the isolation frame 320 and an operation of coupling the inter-busbar coupling block 330 may be performed simultaneously.

Thereafter, the inter-busbar 340 is coupled through the through-coupling hole 331 of the inter-busbar coupling block 330 seated on the partition wall 210, thereby allowing both end portions of the inter-busbar 340 to be positioned on the terminal busbars of adjacent battery assemblies. Alternatively, before the inter-busbar coupling block 330 is coupled to the inter-busbar coupling block coupling groove 211, the inter-busbar 340 may also be coupled to the through-coupling hole 331 of the coupling block 330 in advance.

When a busbar of the battery cell of each cell stack unit 100 is connected to the inter-busbar 340, such as by welding the inter-busbar 340 to the terminal busbar 122 of the busbar assembly, adjacent battery assemblies may be electrically connected. In this case, if necessary, the inter-busbar 340 may be provided with a certain fastening hole 341 to be fastened to the terminal busbar 122 through a fastening member.

As such, according to the present invention, the spread of gases and flames between the battery assemblies is prevented by the partition wall 210 and the gasket 300, and by installing the inter-busbar 340 using the gasket 300, electrical connection between the battery assemblies accommodated in the battery pack can also be effectively performed.

Meanwhile, an electrical component assembly (not shown) may be accommodated in some spaces of the battery pack instead of a battery assembly. The electrical component assembly may accommodate a relay device, a current sensor, a fuse, a battery management system (BMS), and a manual service disconnector (MSD), and the like. The electrical component assembly may be packaged in the battery pack together with the battery assemblies so as not to be exposed to the outside.

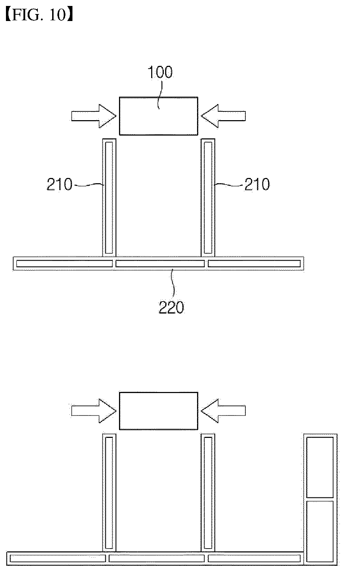

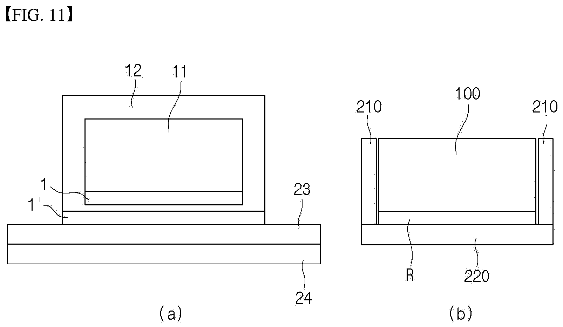

FIG. 10 shows schematic views illustrating a process of installing the battery assembly in the battery pack of the present invention; FIG. 11 shows schematic views illustrating a comparison between the conventional battery pack and the battery pack of the present invention.

For example, when the cell stack unit 100 is used as a battery assembly, the distance between the partition walls 210 may be formed to be less than a width of the cell stack unit 100.

Therefore, in order to accommodate each cell stack unit 100 in the lower pack housing 200, the cell stack unit 100 should be compressed in a width direction and inserted between adjacent partition walls 210. According to the present invention, when the battery cell 110 is accommodated in the battery pack, there is no need to provide the assembly tolerance G required for using the typical battery module. In addition, since battery pack space can be saved in the left-right direction, more battery cells 110 can be installed in the same space, thereby improving energy density.

In addition, since there is no module housing, the heat transfer member R being positioned at one position between the battery assembly 100 and the lower pack housing 200 (base plate) is sufficient, thereby saving materials and further simplifying a cooling path to increase heat dissipation efficiency. In addition, since the bottom portion (base plate) of the lower pack housing 200 has an integrated cooling structure with a cooling passage, a cooling plate is not required. As described above, according to the present embodiment, space is saved not only in the left-right direction, but also in the height direction. Therefore, as compared with a case in which a typical battery module including a module housing is applied as a battery assembly, energy density is greatly improved. In addition, due to a reduction in the number of battery pack components, a structure can be simplified, and the weight of a pack can be reduced, thereby further improving energy density.

### (Second Embodiment)

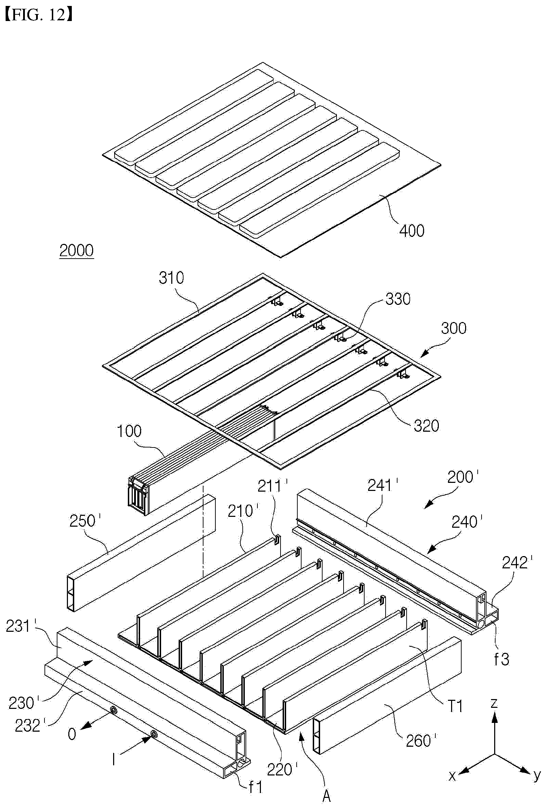

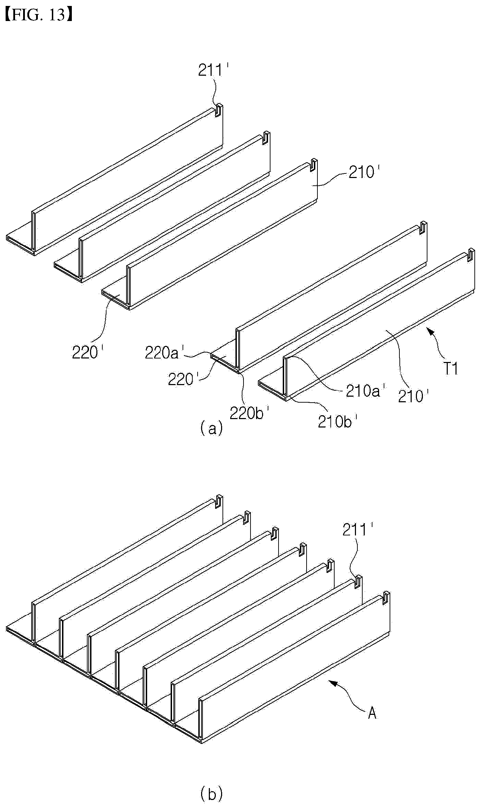

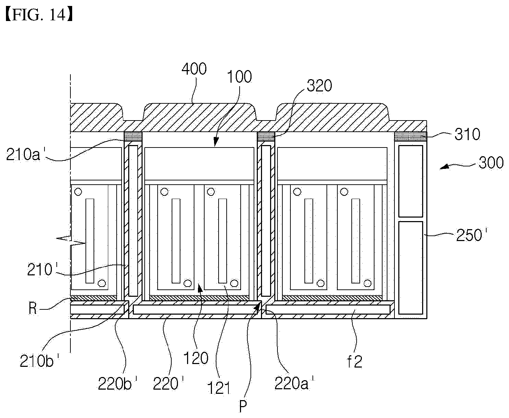

FIG. 12 is a partially exploded perspective view of a battery pack according to another embodiment of the present invention. FIG. 13 shows schematic views illustrating a process of coupling unit frames, which are components of the battery pack of FIG. 12. FIG. 14 is a schematic view illustrating a sealing structure of the battery pack of FIG. 12.

A lower pack housing 200' of the present embodiment may include a unit frame assembly A, and a front frame 230' and a rear frame 240' respectively coupled to front and rear ends of the unit frame assembly A.

In the present embodiment, a plurality of unit frames T1 supporting lower surfaces and one side surfaces of battery assemblies 100 may be provided, and the unit frames may be sequentially coupled like Lego blocks to increase or decrease a bottom area of a battery pack 2000 as needed. That is, the unit frame assembly A may perform the functions of the base plate 220 and the partition wall 210 of the first and second embodiments.

Referring to FIGS. 12 and 13, each of the unit frames T1 includes a partition wall 210' extending in a height direction, and the base plate 220' extending from a lower end portion of the partition wall 210' in one direction (one of left and right directions). The partition walls 210' each include end portions 210'a and 210'b vertically disposed in the height direction. The base plate 220' laterally extends and includes both end portions 220'a and 220'b in a horizontal direction. The base plates of the unit frames are sequentially coupled in a line in one direction to form the unit frame assembly A. That is, the end portion 220'b of the base plate 220' at the lower end portion of the partition wall in one unit frame T1 is coupled to the end portion 220'a of the base plate extending in one direction in a subsequent unit frame to sequentially couple the unit frames T1 in a line in a lateral direction (left-right direction), thereby forming the unit frame assembly A. The base plate 220' supports the lower surface of each battery assembly (for example, a cell stack unit 100). Accordingly, the coupled base plates form the base plate of the conventional battery pack. When the number of coupled unit frames T1 is increased or decreased, the unit frame assembly A may become larger or smaller in the lateral direction. That is, a bottom area of the battery pack constituted by the base plates may be changed as needed.

In addition, the partition wall 210' of the unit frame functions as a partition wall for separating the battery modules in the conventional battery pack. That is, as shown in FIG. 13, the unit frames are sequentially coupled in the lateral direction so that the partition walls 210' of adjacent unit frames are disposed opposite to each other. Each battery assembly may be disposed in a space between the opposite partition walls 210'. Accordingly, the unit frames may be sequentially coupled in the lateral direction, thereby increasing the area of a bottom portion on which the battery assembly is disposed and naturally increasing the number of partition walls for separating the battery assemblies.

In this way, like Lego blocks, as the number of coupled unit frames is changed to couple the unit frames in the lateral direction, the size of the battery pack can be adjusted to satisfy various requirements. Accordingly, the electric capacity of the battery pack can also be freely adjusted to satisfy the required performance. Therefore, according to the present embodiment, the degree of freedom in design of the battery pack can be greatly increased.

Referring to FIG. 12, each battery assembly has a predetermined width in a cell stacking direction (parallel to the left-right direction) and is elongated in a longitudinal direction (parallel to a front-rear direction) to have a predetermined length. Each of the battery assemblies is accommodated in the space between adjacent partition walls 210' of the unit frame assembly A. In this case, the lower surface of each battery assembly is supported on the base plate 220' of each unit frame, and both side surfaces of the battery assembly in a width direction are supported on the opposite partition walls 210' of adjacent unit frames.

Meanwhile, the unit frame extends to a predetermined length in the front-rear direction. That is, the partition wall 210' and the base plate 220' extend in the front-rear direction. Lengths of the partition wall 210' and the base plate 220' in the front-rear direction are determined to sufficiently accommodate a length of the battery assembly in the front-rear direction, for example, a length of the cell stack unit 100. That is, a length of the unit frame in the front-rear direction is determined according to a length of a battery cell included in the battery assembly. Alternatively, as will be described below, when a plurality of cell stack units are arranged in a line in the front-rear direction, the unit frame may be formed to be elongated in the front-rear direction so as to correspond to the cell stack units. That is, according to the present invention, not only is a bottom size of the battery pack changed by increasing or decreasing the number of coupled unit frames in the lateral direction, but also the bottom size of the battery pack is increased by increasing the length of the unit frame in the front-rear direction according to a length of the base assembly or the number of base assemblies arranged in a longitudinal direction.

A height of the partition wall 210' of the unit frame may be formed to be greater than or equal to a height of the battery assembly. Thus, the partition wall 210' can stably support a side surface of the battery assembly.

The partition wall 210' and the base plate 220' may be manufactured by being integrally molded. Alternatively, two flat plates may be vertically disposed such that one ends are in contact with each other, and the ends of the flat plates in contact with each other may be welded and coupled to manufacture the unit frame.

A metal material such as aluminum may be extruded such that an internal empty space is formed therein, thereby manufacturing the unit frame T1 as a hollow frame. In this way, the unit frames are formed in a hollow form, thereby reducing the weight of the battery pack and increasing energy efficiency. In addition, when a rib-shaped partition wall is formed in the internal space, the mechanical rigidity of the frames can be maintained at a reliable level. A hollow space formed in the unit frame can also be used as a passage through which a cooling fluid passes or a venting channel through which venting gas generated in the battery pack is vented.

The unit frames may be coupled to each other, for example, through welding, such as friction stir welding. In this case, a stepped portion with a shape, which matches a shape of the front end portion 220'a of the base plate of a subsequent unit frame, may be formed at the end portion 220'b of the base plate at a lower end portion of the partition wall 210' in the unit frame. That is, as shown in FIG. 14, the stepped portion is provided at the end portion of the base plate at the lower end portion of the partition wall 210' (or the lower end portion of the partition wall 210' connected to the end portion of the base plate). The shape of the stepped portion is formed to engage with the shape of the front end portion of the base plate of the subsequent unit frame. Therefore, adjacent base plates in the lateral direction are coupled to engage with each other at the stepped portion, thereby increasing the coupling strength of the unit frame. In addition, since coupling surfaces of the stepped portion and the base plate 220' can support the load of the partition wall 210' of the unit frame and the battery assembly in the height direction, the load of the battery assembly 100 can be appropriately distributed.

Referring to FIG. 12, a front frame 230' is coupled to a front end of the unit frame assembly A in the front-rear direction. In addition, a rear frame 240' is coupled to a rear end of the unit frame assembly A in the front-rear direction.

The front frame 230' and the rear frame cover front and rear surfaces of the battery assembly and are coupled to the unit frame assembly A. Accordingly, an accommodation space for the battery assembly is formed by the base plate of the unit frame, the opposite partition walls 210' of adjacent unit frames, the front frame 230', and the rear frame.

The front frame 230' may include a front cover 231' extending in the height direction, and a front plate 232' protruding forward from a lower portion of the front cover 231'.

The rear frame 240' may also include a rear cover 241' extending in the height direction, and a rear plate 242' protruding rearward from a lower portion of the rear cover.

A height of each of the front cover and the rear cover may be equal to a height of the partition wall 210' of the unit frame.

Referring to FIG. 12, in the foremost unit frame T1 of the unit frame assembly A in one direction, an end portion of the base plate is open. Therefore, a battery assembly cannot be accommodated on the base plate of the foremost unit frame. In this case, the base plate of the foremost unit frame may be used as a coupling portion to be coupled to a structure such as a vehicle. In such an example, lateral lengths of the front frame 230' and the rear frame 240' coupled to the unit frame assembly A may extend from the rearmost unit frame in one direction to the partition wall 210' of the foremost unit frame in one direction

However, in order to accommodate the battery assembly in the foremost unit frame, the battery pack may further include, for example, a first side frame 250' coupled to the base plate 220' of the foremost unit frame. The first side frame 250' may have an elongated shape in the front-rear direction. A length of the first side frame 250' in the front-rear direction may be equal to a length of the unit frame T1 in the front-rear direction. Accordingly, the first side frame 250' may be coupled to the end portion of the base plate of the foremost unit frame to cover the foremost end of the unit frame assembly A in one direction. Accordingly, a battery assembly can be additionally accommodated in a space formed by the first side frame 250' and the foremost unit frame. In this case, a lower surface of the battery assembly is supported on the base plate 220' of the foremost unit frame T1, and each of both side surfaces is supported on one of the first side frame and the partition wall 210' of the foremost unit frame opposite thereto. In this case, lengths of the front frame 230' and the rear frame 240' in the left-right direction may extend to the first side frame 250' from the rearmost unit frame in one direction. Accordingly, an accommodation space for the foremost battery assembly in one direction is formed by the base plate of the foremost unit frame, the first side frame, the front frame, and the rear frame. A height of the first side frame 250' may be equal to a height of each of the front frame 230' and the rear frame 240'.

In addition to the unit frame, the side frame, the front frame, and the rear frame may also be manufactured as hollow frames with a space formed therein. Therefore, the weight of the battery pack can be further reduced.

Meanwhile, in the present embodiment, the battery pack may further include a second side frame 260' coupled to the partition wall 210' of the rearmost unit frame T1 of the unit frame assembly A in one direction. Since the partition wall 210' of the rearmost unit frame T1 is thin, it may be advantageous to include the second side frame 260' covering a right side of the battery pack. A length and a height of the second side frame 260' may be equal to those of the first side frame 250'. In the present embodiment, since the partition wall 210' of the rearmost unit frame T1 and the second side frame 260' are coupled to form a right wall of the battery pack, a width of the second side frame 260' may be made less than a width of the first side frame 250' by as much as a thickness of the partition wall.

Meanwhile, a length of the base plate 220' of the unit frame T1 in the left-right direction may be determined in a range in which a distance between the partition walls 210' of adjacent unit frames is less than a width of each battery assembly. That is, the length of the base plate in the left-right direction can be appropriately determined in consideration of an insertion space for the battery assembly.

Even in the present embodiment, the same gasket 300 as in the first embodiment may be provided. The gasket 300 is coupled on an edge of an upper surface of the lower pack housing 200' and the partition wall 210' of the unit frame assembly A. Specifically, an outer frame 310 of the gasket 300 is coupled on an upper surface of the front frame 230', an upper surface of the rear frame 240', an upper surface of the first side frame 250', and the second side frame 260' or the partition wall 210' of the rearmost unit frame of the unit frame assembly A, wherein the front frame 230', the rear frame 240', the first side frame 250', and the second side frame 260' constitute the lower pack housing 200'. In addition, an isolation frame 320 of the gasket 300 may be coupled on the partition wall 210' of the unit frame assembly A.

As shown in FIG. 14, when the gasket 300 and the lower pack housing 200' are coupled, adjacent battery assemblies (for example, cell stack units 100) are completely isolated in the left-right direction due to the partition wall 210' and the isolation frame 320.

Thereafter, an upper pack housing 400 may be coupled to an open upper surface of the lower pack housing 200' with the gasket 300 therebetween so that the battery assemblies can be individually sealed.

In the present embodiment, since each battery assembly is isolated within each unit frame T1, sealing can be easily achieved. That is, the battery pack can be designed to be scalable by constructing the lower pack housing 200 using a unit frame, and by coupling the gasket 300 on the unit frame assembly A, each battery assembly is sealed, thereby preventing high-temperature gases and flames from spreading to adjacent battery assemblies.

In FIG. 12, an inter-busbar coupling structure in the present embodiment is shown. In the present embodiment, the configuration of the gasket 300 is basically the same as that of the first embodiment, except that the configuration of the lower pack housing 200' is different from that of the first embodiment. That is, an inter-busbar coupling block 330 is provided on the isolation frame 320, and an inter-busbar coupling block coupling groove 211' is formed in an upper portion of the partition wall 210' of the unit frame. The inter-busbar coupling structure is the same as that of the first embodiment, except that the partition wall 210' is a component of the unit frame and is integrated with the base plate. Therefore, the isolation frame 320 may be coupled to an upper surface of the partition 210' such that the inter-busbar coupling block 330 is inserted into the inter-busbar coupling block coupling groove 211'. An inter-busbar 340 may be coupled to the inter-busbar coupling block 330 in advance or may be coupled to the inter-busbar coupling block coupling groove 211' and then connected to a through-coupling hole 331 of the inter-busbar coupling block 330.

Even in the present embodiment, the spread of gases and flames is blocked between the battery assemblies using the gasket 300, and by installing the inter-busbar 340, electrical connection between the battery assemblies accommodated in the battery pack can also be effectively performed.

### (Third Embodiment)

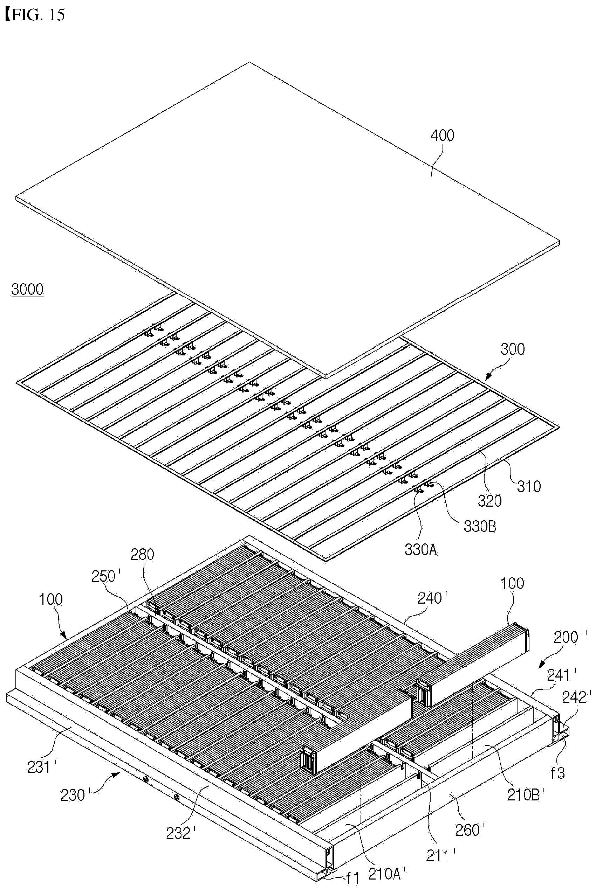

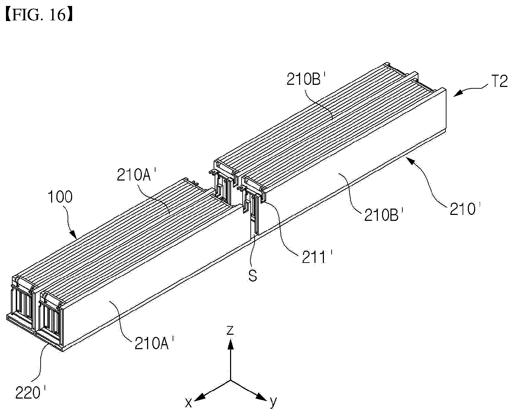

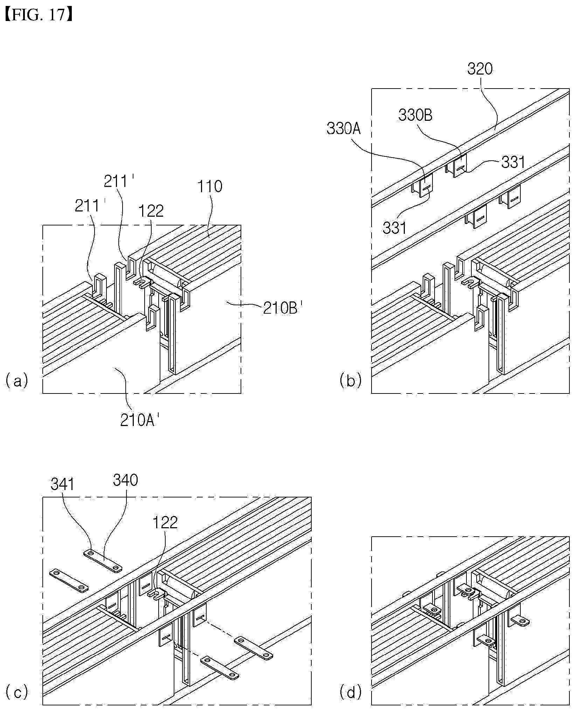

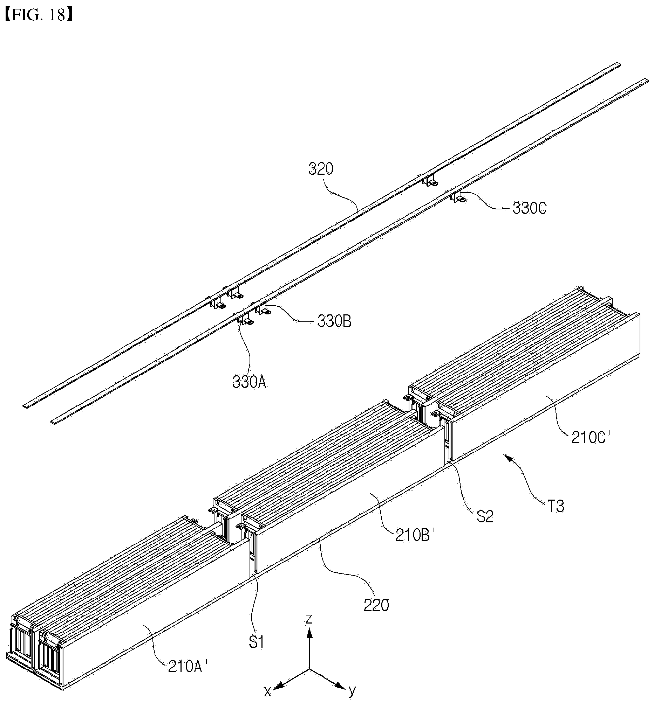

FIG. 15 is a partially exploded perspective view illustrating a battery pack according to still another embodiment of the present invention. FIG. 16 is a view illustrating the coupling between a unit frame and a battery assembly in the battery pack of the embodiment of FIG. 15. FIG. 17 shows schematic views illustrating a process of coupling a gasket and an inter-busbar in the battery pack of FIG. 15. FIG. 18 is a schematic view of a unit frame and a gasket, which are components of a battery pack, according to a modified example of the present invention.

In a battery pack 3000 of the present embodiment, a lower pack housing 200' includes a unit frame assembly A as in the second embodiment. However, the battery pack 3000 of the present embodiment corresponds to a case in which the battery assemblies (for example, cell stack units 100) are arranged in two or more columns between opposite partition walls 210' in an extending direction of the partition walls 210'. In this case, since the configuration of the unit frame is modified as shown in FIG. 16 to accommodate two or more columns of cell stack units 100, this new unit frame is denoted by T2.

That is, each unit frame T2 includes two or more partition walls 210A' and 210B' spaced a predetermined interval S apart from each other in a front-rear direction and positioned in a line, and one base plate 220' that extends in one direction from a lower end portion of each partition 210' and is elongated in the front-rear direction. In the present embodiment, as in the second embodiment, the base plates 220' are consecutively coupled to constitute a bottom portion of a lower pack housing 200', and thus one base plate is formed in the front-rear direction. Meanwhile, the partition walls 210A' and 210B' are formed in a line along the base plate 220' in the front-rear direction to support the battery assemblies in each column

The battery assemblies are disposed in two or more columns in the front-rear direction to correspond to the number of partition walls 210A' and 210B'.

In addition, a center frame 280, which is positioned perpendicular to the front-rear direction in the predetermined interval S between the partition walls 210A' and 210B' and is coupled to the unit frame assembly A, may be provided to reinforce the rigidity of the unit frame assembly A. In this way, when the unit frame T2 becomes longer in the front-rear direction, lengths of first and second side frames 250' and 260' coupled to the unit frame assembly A also become longer. As in the second embodiment, side wall frames coupled to the unit frame assembly A may include a front frame 230', a rear frame 240', and first and second side frames 250' and 260'

Even in the present embodiment, a gasket 300 is provided between an upper pack housing 400 and the lower pack housing 200, and the upper pack housing 400 is coupled to an open upper surface of the lower pack housing 200' with the gasket 300 therebetween to seal the battery assemblies.

However, since the battery assemblies are arranged in a plurality of columns in the front-rear direction, a length of the gasket 300 in the front-rear direction is also formed to correspond to the plurality of columns. In addition, when the battery assemblies are disposed in two columns, an inter-busbar coupling block 330 installed on an isolation frame 320 is formed as a pair of inter-busbar coupling blocks 330A and 330B to correspond to the two columns. In addition, inter-busbar coupling block coupling grooves 211' of the partition walls 210A' and 210B' provided in the unit frame T2 are also formed as a pair of inter-busbar coupling block coupling grooves. In FIG. 17,a process of coupling the inter-busbar coupling blocks 330A and 330B when coupling the gasket 300 and the partition walls 210A' and 210B' of the lower pack housing 200' is shown in detail.

As shown in FIG. 17(a), the inter-busbar coupling block coupling groove 211' is formed in each of upper portions of both partition walls 210A' and 210B' facing the center frame.

In FIG. 17(b), the gasket 300 is positioned on the battery assembly, which is the cell stack unit 100.

As shown in FIG. 17(c), while the gasket 300 is coupled on an edge of an upper surface of the lower pack housing 200' and the partition walls 210A' and 210B', the pair of inter-busbar coupling blocks 330A and 330B installed on the isolation frame 320 are inserted into and coupled to the pair of opposite inter-busbar coupling block coupling grooves 211'. Thereafter, a pair of inter-busbars 340 are inserted into and coupled to through-coupling holes 331 of the inter-busbar coupling blocks.

Finally, as shown in FIG. 17(d), when each of both end portions of the inter-busbar 340 is coupled to one of terminal busbars 122 of busbar assemblies of the cell stack units 100, which are adjacent to each other with a partition wall interposed therebetween, through welding or a fastening member, adjacent battery assemblies may be electrically connected to each other.

FIG. 18 illustrates that partition walls 210' of the unit frame are disposed in three columns 210A', 210B', and 210C' at predetermined intervals in a front-rear direction. However, there is only one base plate 220' constituting the unit frame.

In this case, since three columns of battery assemblies may be installed in the unit frame in the front-rear direction, this new unit frame is denoted by symbol T3. As a result, a bottom area of a unit frame assembly A and a battery pack is further increased in the front-rear direction. In theory, there is no limitation on a length of the unit frame T3 in the front-rear direction or the number of partition walls 210' disposed in the front-rear direction. However, depending on an installation space of a vehicle and the required capacity of the battery pack, the number of required battery assemblies may be limited.

In addition, in FIG. 18, a gasket 300 provided with an isolation frame 320 including three columns of inter-busbar coupling blocks 330A, 330B, and 330C to correspond to three columns 210A', 210B', and 210C' of the partition walls is shown. In this way, in response to an increase in the number of columns of the battery assembly, the number of inter-busbar coupling blocks 330 may be increased.

Meanwhile, as shown in FIG. 18, two intervals S1 and S2 may be formed between the partition walls 210A', 210B', and 210C' in the unit frame in which three columns of the battery assemblies may be disposed. Two center frames may be disposed in the intervals.

As described above, according to the present embodiment, the set number of battery assemblies may be appropriately arranged by separating the battery assemblies into rows and columns in lateral and front-rear directions of the battery pack. In the present invention, by assembling unit frames in the lateral direction like Lego blocks, a unit frame assembly A or a bottom portion of a battery pack can be easily changed according to the number of battery assemblies required in the lateral direction. In addition, a length of a unit frame in the front-rear direction can be lengthened in accordance with the number of columns of battery assemblies required in the front-rear direction, and as in the present embodiment, the number of partition walls can also be adjusted in accordance with the number of the respective columns.

**In** this way, according to the present invention, since a bottom area of one battery pack can be freely changed to respond to variously required design standards, it is possible to manufacture a highly versatile battery pack.

**In** addition, in the present invention, as a gasket 300 and a partition are provided to isolate and seal battery assemblies from each other in a cell-to-pack battery module, gas is suppressed from spreading to adjacent battery cells to greatly improve safety.

## Claims

1. A battery pack (1000, 2000, 3000) comprising:
a plurality of battery assemblies;
a lower pack housing (200, 200') that includes a plurality of partition walls (210, 210') each disposed between adjacent battery assemblies, accommodates the plurality of battery assemblies, and has an open upper surface;
a gasket (300) coupled on an edge of the upper surface of the lower pack housing (200, 200') and the partition wall (210, 210') to isolate each battery assembly accommodated in the lower pack housing together with the partition wall; and
an upper pack housing (400) coupled to the open upper surface of the lower pack housing (200, 200') with the gasket (300) therebetween to seal the battery assemblies,
**characterized in that** the gasket (300) includes:
an outer frame (310) coupled to the edge of the upper surface of the lower pack housing; and
a plurality of isolation frames (320) that extend parallel to the partition walls (210, 210') inside the outer frame and are coupled to upper surfaces of the partition walls to isolate adjacent battery assemblies together with the partition walls.

2. The battery pack of claim 1, wherein a height of the partition wall (210, 210') is greater than or equal to a height of the battery assembly.

3. The battery pack of claim 1, wherein a distance between adjacent partition walls (210, 210') is less than a width of each of the battery assemblies.

4. The battery pack of claim 1, wherein a heat transfer member (1) is provided between the battery assembly and a bottom surface of the lower pack housing (200, 200').

5. The battery pack of claim 1, wherein the lower pack housing (200, 200') has a cooling passage (f2) embedded in a bottom portion in direct contact with the battery assembly.

6. The battery pack of claim 1, wherein an inter-busbar (340) configured to pass through the partition wall (210, 210') and electrically connect adjacent battery assemblies is installed.

7. The battery pack of claim 1, wherein the lower pack housing (200, 200') includes a base plate (220, 220') and a side wall frame coupled to an edge of the base plate.

8. The battery pack of claim 1, wherein the battery assemblies are arranged in two or more columns between adjacent partition walls (210, 210') in an extending direction of the partition wall,
two or more partition walls (210, 210') are installed to be spaced a predetermined interval apart from each other in an arrangement direction of the battery assemblies to correspond to the number of columns of the battery assemblies, and
the battery pack further includes a center frame (280), which extends in a direction perpendicular to the arrangement direction of the battery assemblies and is installed in the predetermined interval between the partition walls (210, 210').

9. The battery pack of claim 1, wherein the pack housing includes:
a unit frame assembly (A), which is an assembly of a plurality of unit frames (T1, T2, T3) each including the partition wall (210, 210') and a base plate (220, 220') extending in one direction from a lower end portion of the partition wall (210,210'), wherein an end portion of the base plate (220, 220') at the lower end portion of the partition wall (210,210') in one unit frame (T1, T2, T3) is coupled to an end portion of the base plate (220, 220') extending in the one direction in a subsequent unit frame (T1, T2, T3) to sequentially couple the unit frames in a line in a lateral direction and form the unit frame assembly;
a front frame (230) coupled to a front end of the unit frame assembly (A) in a front-rear direction; and
a rear frame (240) coupled to a rear end of the unit frame assembly (A) in the front-rear direction, and
each battery assembly is accommodated in each unit frame (T1, T2, T3) such that a lower surface of each battery assembly is supported on the base plate (220, 220') of each unit frame (T1, T2, T3) and both side surfaces of each battery assembly are supported on the partition walls of adjacent unit frames, which are opposite to each other.

10. The battery pack of claim 9, further comprising a first side frame (250) coupled to the base plate of a foremost unit frame of the unit frame assembly (A) in the one direction.

11. The battery pack of claim 9, further comprising a second side frame (260) coupled to a sidewall of a rearmost unit frame of the unit frame assembly (A) in the one direction.

12. The battery pack of claim 9, wherein each unit frame (T1, T2, T3) includes two or more partition walls (210, 210')positioned in a line at a predetermined interval in the front-rear direction and one base that extends in the one direction from the lower end portion of each of the partition walls and is elongated in the front-rear direction,
the plurality of battery assemblies are disposed in two or more columns in the front-rear direction to correspond to the number of the partition walls (210, 210'), and
the battery pack further includes a center frame positioned perpendicular to the front-rear direction in the predetermined interval between the partition walls and coupled to the unit frame assembly.

13. The battery pack of claim 1, wherein the plurality of isolation frames (320) each include an inter-busbar coupling block (330) to which an inter-busbar (340) is coupled,
an inter-busbar coupling block coupling groove is formed in an upper portion of the partition wall, and
the isolation frame (320) is coupled to the upper surface of the partition wall such that the inter-busbar coupling block is inserted into the inter-busbar coupling block coupling groove.

14. The battery pack of claim 1, wherein, when the battery assemblies (A) and the partition walls (210, 210') are arranged in two or more columns in an extending direction of the partition wall, and a center frame (280) is installed perpendicular to the extending direction between the battery assemblies and between the partition walls, the plurality of isolation frames (320) each include a pair of inter-busbar coupling blocks (330) , and inter-busbar coupling block coupling grooves to which the pair of inter-busbar coupling blocks are coupled are formed in upper portions of the partition walls at both sides facing the center frame (280).

## Patentansprüche

1. Batteriepack (1000, 2000, 3000), umfassend:
eine Vielzahl von Batterieanordnungen;
ein unteres Packgehäuse (200, 200'), das eine Vielzahl von jeweils zwischen benachbarten Batterieanordnungen angeordneten Trennwänden (210, 210') enthält, die Vielzahl von Batterieanordnungen aufnimmt und eine offene Oberseite aufweist;
eine Dichtung (300), die an einer Kante der Oberseite des unteren Packgehäuses (200, 200') und der Trennwand (210, 210') angebracht ist, um jede im unteren Packgehäuse aufgenommene Batterieanordnung zusammen mit der Trennwand zu isolieren; und
ein oberes Packgehäuse (400), das mit der offenen Oberseite des unteren Packgehäuses (200, 200') mit der dazwischenliegenden Dichtung (300) gekoppelt ist, um die Batterieanordnungen abzudichten,
**dadurch gekennzeichnet, dass** die Dichtung (300) Folgendes enthält:
einen äußeren Rahmen (310), der mit der Kante der Oberseite des unteren Packgehäuses gekoppelt ist; und
eine Vielzahl von Isolierrahmen (320), die sich parallel zu den Trennwänden (210, 210') innerhalb des äußeren Rahmens erstrecken und mit den Oberseiten der Trennwände gekoppelt sind, um benachbarte Batterieanordnungen zusammen mit den Trennwänden zu isolieren.

2. Batteriepack nach Anspruch 1, wobei eine Höhe der Trennwand (210, 210') größer oder gleich einer Höhe der Batterieanordnung ist.

3. Batteriepack nach Anspruch 1, wobei ein Abstand zwischen benachbarten Trennwänden (210, 210') kleiner als eine Breite jeder der Batterieanordnungen ist.

4. Batteriepack nach Anspruch 1, wobei ein Wärmeübertragungselement (1) zwischen der Batterieanordnung und einer Bodenfläche des unteren Packgehäuses (200, 200') vorgesehen ist.

5. Batteriepack nach Anspruch 1, wobei das untere Packgehäuse (200, 200') einen Kühlkanal (f2) aufweist, der in einem unteren Abschnitt in direktem Kontakt mit der Batterieanordnung eingebettet ist.

6. Batteriepack nach Anspruch 1, wobei eine Zwischensammelschiene (340) verbaut ist, die dazu ausgelegt ist, die Trennwand (210, 210') zu durchdringen und benachbarte Batterieanordnungen elektrisch zu verbinden.

7. Batteriepack nach Anspruch 1, wobei das untere Packgehäuse (200, 200') eine Grundplatte (220, 220') und einen Seitenwandrahmen enthält, der mit einer Kante der Grundplatte gekoppelt ist.

8. Batteriepack nach Anspruch 1, wobei die Batterieanordnungen in zwei oder mehr Spalten zwischen benachbarten Trennwänden (210, 210') in einer Erstreckungsrichtung der Trennwand angeordnet sind,
zwei oder mehr Trennwände (210, 210') so verbaut sind, dass sie in einer Anordnungsrichtung der Batterieanordnungen in einem vorbestimmten Abstand voneinander beabstandet sind, um der Anzahl der Spalten aus Batterieanordnungen zu entsprechen, und
das Batteriepack ferner einen Mittelrahmen (280) enthält, der sich in einer Richtung senkrecht zur Anordnungsrichtung der Batterieanordnungen erstreckt und in dem vorbestimmten Abstand zwischen den Trennwänden (210, 210') verbaut ist.

9. Batteriepack nach Anspruch 1, wobei das Packgehäuse Folgendes enthält:
eine Einheitsrahmenanordnung (A), bei der es sich um eine Anordnung einer Vielzahl von Einheitsrahmen (T1, T2, T3) handelt, die jeweils die Trennwand (210, 210') und eine Grundplatte (220, 220') enthalten, die sich in einer Richtung von einem unteren Endabschnitt der Trennwand (210, 210') ausgehend erstreckt, wobei ein Endabschnitt der Grundplatte (220, 220') am unteren Endabschnitt der Trennwand (210, 210') in einem Einheitsrahmen (T1, T2, T3) mit einem Endabschnitt der Grundplatte (220, 220') gekoppelt ist, der sich in der einen Richtung in einem nachfolgenden Einheitsrahmen (T1, T2, T3) erstreckt, um die Einheitsrahmen nacheinander in einer Linie in seitlicher Richtung zu koppeln und die Einheitsrahmenanordnung zu bilden;
einen vorderen Rahmen (230), der mit einem vorderen Ende der Einheitsrahmenanordnung (A) in einer X-Richtung gekoppelt ist; und
einen hinteren Rahmen (240), der mit einem hinteren Ende der Einheitsrahmenanordnung (A) in der X-Richtung gekoppelt ist, und
wobei jede Batterieanordnung in jedem Einheitsrahmen (T1, T2, T3) so aufgenommen ist, dass eine Unterseite jeder Batterieanordnung auf der Grundplatte (220, 220') jedes Einheitsrahmens (T1, T2, T3) gelagert ist und beide Seitenflächen jeder Batterieanordnung auf den Trennwänden benachbarter Einheitsrahmen gelagert sind, die einander gegenüberliegen.

10. Batteriepack nach Anspruch 9, ferner umfassend einen ersten Seitenrahmen (250), der mit der Grundplatte eines vordersten Einheitsrahmens der Einheitsrahmenanordnung (A) in der einen Richtung gekoppelt ist.

11. Batteriepack nach Anspruch 9, ferner umfassend einen zweiten Seitenrahmen (260), der mit einer Seitenwand eines hintersten Einheitsrahmens der Einheitsrahmenanordnung (A) in der einen Richtung gekoppelt ist.

12. Batteriepack nach Anspruch 9, wobei jeder Einheitsrahmen (T1, T2, T3) zwei oder mehr Trennwände (210, 210') enthält, die in einer Linie in einem vorbestimmten Abstand in der X-Richtung positioniert sind, sowie eine Basis, die sich in der einen Richtung vom unteren Endabschnitt jeder der Trennwände ausgehend erstreckt und sich in der X-Richtung fortsetzt,
wobei die Vielzahl von Batterieanordnungen in zwei oder mehr Spalten in der X-Richtung angeordnet ist, um der Anzahl der Trennwände (210, 210') zu entsprechen, und
wobei das Batteriepack ferner einen Mittelrahmen enthält, der senkrecht zur X-Richtung in dem vorbestimmten Abstand zwischen den Trennwänden positioniert und mit der Einheitsrahmenanordnung gekoppelt ist.

13. Batteriepack nach Anspruch 1, wobei die Vielzahl von Isolierrahmen (320) jeweils einen Zwischensammelschienen-Kopplungsblock (330) enthalten, an den eine Zwischensammelschiene (340) gekoppelt ist,
wobei eine Kopplungsnut für den Zwischensammelschienen-Kopplungsblock in einem oberen Abschnitt der Trennwand ausgebildet ist, und
wobei der Isolierrahmen (320) so mit der Oberseite der Trennwand gekoppelt ist, dass der Zwischensammelschienen-Kopplungsblock in die Kopplungsnut für den Zwischensammelschienen-Kopplungsblock eingesetzt ist.

14. Batteriepack nach Anspruch 1, wobei dann, wenn die Batterieanordnungen (A) und die Trennwände (210, 210') in zwei oder mehr Spalten in einer Erstreckungsrichtung der Trennwand angeordnet sind und ein Mittelrahmen (280) senkrecht zur Erstreckungsrichtung zwischen den Batterieanordnungen und zwischen den Trennwänden verbaut ist, die Vielzahl von Isolierrahmen (320) jeweils ein Paar von Zwischensammelschienen-Kopplungsblöcken (330) enthalten, und Kopplungsnuten für den Zwischensammelschienen-Kopplungsblock, an die das Paar von Zwischensammelschienen-Kopplungsblöcken gekoppelt ist, in oberen Abschnitten der Trennwände auf beiden dem Mittelrahmen (280) zugewandten Seiten ausgebildet sind.

## Revendications

1. Bloc-batterie (1000, 2000, 3000) comprenant :
une pluralité d'ensembles de batterie ;
un boîtier de bloc inférieur (200, 200') qui inclut une pluralité de parois de séparation (210, 210') chacune disposée entre des ensembles de batterie adjacents, loge la pluralité d'ensembles de batterie, et a une surface supérieure ouverte ;
un joint d'étanchéité (300) couplé sur un bord de la surface supérieure du boîtier de bloc inférieur (200, 200') et de la paroi de séparation (210, 210') pour isoler chaque ensemble de batterie logé dans le boîtier de bloc inférieur conjointement avec la paroi de séparation ; et
un boîtier de bloc supérieur (400) couplé à la surface supérieure ouverte du boîtier de bloc inférieur (200, 200') avec le joint d'étanchéité (300) interposé pour sceller les ensembles de batterie,
**caractérisé en ce que** le joint d'étanchéité (300) inclut :
un cadre extérieur (310) couplé au bord de la surface supérieure du boîtier de bloc inférieur ; et
une pluralité de cadres d'isolation (320) qui s'étendent parallèlement aux parois de séparation (210, 210') à l'intérieur du cadre extérieur et sont couplés aux surfaces supérieures des parois de séparation pour isoler des ensembles de batterie adjacents conjointement avec les parois de séparation.

2. Le bloc-batterie selon la revendication 1, dans lequel une hauteur de la paroi de séparation (210, 210') est supérieure ou égale à une hauteur de l'ensemble de batterie.

3. Le bloc-batterie selon la revendication 1, dans lequel une distance entre des parois de séparation adjacentes (210, 210') est inférieure à une largeur de chacun des ensembles de batterie.

4. Le bloc-batterie selon la revendication 1, dans lequel un élément de transfert de chaleur (1) est prévu entre l'ensemble de batterie et une surface inférieure du boîtier de bloc inférieur (200, 200').

5. Le bloc-batterie selon la revendication 1, dans lequel le boîtier de bloc inférieur (200, 200') a un passage de refroidissement (f2) intégré dans une partie inférieure en contact direct avec l'ensemble de batterie.

6. Le bloc-batterie selon la revendication 1, dans lequel une barre omnibus d'interconnexion (340) configurée pour passer à travers la paroi de séparation (210, 210') et connecter électriquement des ensembles de batterie adjacents est installée.

7. Le bloc-batterie selon la revendication 1, dans lequel le boîtier de bloc inférieur (200, 200') inclut une plaque de base (220, 220') et un cadre de paroi latérale couplé à un bord de la plaque de base.

8. Le bloc-batterie selon la revendication 1, dans lequel les ensembles de batterie sont agencés en deux colonnes ou plus entre des parois de séparation adjacentes (210, 210') dans une direction d'extension de la paroi de séparation,
deux parois de séparation ou plus (210, 210') sont installées pour être espacées d'un intervalle prédéterminé l'une de l'autre dans une direction d'agencement des ensembles de batterie pour correspondre au nombre de colonnes des ensembles de batterie, et
le bloc-batterie inclut en outre un cadre central (280), qui s'étend dans une direction perpendiculaire à la direction d'agencement des ensembles de batterie et est installé dans l'intervalle prédéterminé entre les parois de séparation (210, 210').

9. Le bloc-batterie selon la revendication 1, dans lequel le boîtier de bloc inclut :
un ensemble de cadres unitaires (A), qui est un ensemble d'une pluralité de cadres unitaires (T1, T2, T3) incluant chacun la paroi de séparation (210, 210') et une plaque de base (220, 220') s'étendant dans une direction depuis une partie d'extrémité inférieure de la paroi de séparation (210, 210'), dans lequel une partie d'extrémité de la plaque de base (220, 220') au niveau de la partie d'extrémité inférieure de la paroi de séparation (210, 210') dans un cadre unitaire (T1, T2, T3) est couplée à une partie d'extrémité de la plaque de base (220, 220') s'étendant dans ladite une direction dans un cadre unitaire subséquent (T1, T2, T3) pour coupler séquentiellement les cadres unitaires en ligne dans une direction latérale et former l'ensemble de cadres unitaires ;
un cadre avant (230) couplé à une extrémité avant de l'ensemble de cadres unitaires (A) dans une direction avant-arrière ; et
un cadre arrière (240) couplé à une extrémité arrière de l'ensemble de cadres unitaires (A) dans la direction avant-arrière, et
chaque ensemble de batterie est logé dans chaque cadre unitaire (T1, T2, T3) de telle sorte qu'une surface inférieure de chaque ensemble de batterie est supportée sur la plaque de base (220, 220') de chaque cadre unitaire (T1, T2, T3) et les deux surfaces latérales de chaque ensemble de batterie sont supportées sur les parois de séparation de cadres unitaires adjacents, qui sont opposées l'une à l'autre.

10. Le bloc-batterie selon la revendication 9, comprenant en outre un premier cadre latéral (250) couplé à la plaque de base d'un cadre unitaire le plus en avant de l'ensemble de cadres unitaires (A) dans ladite une direction.

11. Le bloc-batterie selon la revendication 9, comprenant en outre un second cadre latéral (260) couplé à une paroi latérale d'un cadre unitaire le plus en arrière de l'ensemble de cadres unitaires (A) dans ladite une direction.

12. Le bloc-batterie selon la revendication 9, dans lequel chaque cadre unitaire (T1, T2, T3) inclut deux parois de séparation ou plus (210, 210') positionnées en ligne à un intervalle prédéterminé dans la direction avant-arrière et une base qui s'étend dans ladite une direction depuis la partie d'extrémité inférieure de chacune des parois de séparation et est allongée dans la direction avant-arrière,
la pluralité d'ensembles de batterie sont disposés en deux colonnes ou plus dans la direction avant-arrière pour correspondre au nombre des parois de séparation (210, 210'), et
le bloc-batterie inclut en outre un cadre central positionné perpendiculairement à la direction avant-arrière dans l'intervalle prédéterminé entre les parois de séparation et couplé à l'ensemble de cadres unitaires.

13. Le bloc-batterie selon la revendication 1, dans lequel la pluralité de cadres d'isolation (320) incluent chacun un bloc de couplage de barre omnibus d'interconnexion (330) auquel une barre omnibus d'interconnexion (340) est couplée,
une rainure de couplage de bloc de couplage de barre omnibus d'interconnexion est formée dans une partie supérieure de la paroi de séparation, et
le cadre d'isolation (320) est couplé à la surface supérieure de la paroi de séparation de telle sorte que le bloc de couplage de barre omnibus d'interconnexion est inséré dans la rainure de couplage de bloc de couplage de barre omnibus d'interconnexion.

14. Le bloc-batterie selon la revendication 1, dans lequel, lorsque les ensembles de batterie (A) et les parois de séparation (210, 210') sont agencés en deux colonnes ou plus dans une direction d'extension de la paroi de séparation, et qu'un cadre central (280) est installé perpendiculairement à la direction d'extension entre les ensembles de batterie et entre les parois de séparation, la pluralité de cadres d'isolation (320) incluent chacun une paire de blocs de couplage de barre omnibus d'interconnexion (330), et des rainures de couplage de bloc de couplage de barre omnibus d'interconnexion auxquelles la paire de blocs de couplage de barre omnibus d'interconnexion sont couplés sont formées dans des parties supérieures des parois de séparation des deux côtés faisant face au cadre central (280).
